# EUROPEAN PATENT SPECIFICATION

(11) **EP 3 177 052 B1**
(45) Date of publication and mention of the grant of the patent: **10.07.2019**
(21) Application number: 14881972.5
(22) Date of filing: 08.12.2014
(51) Int. Cl.: H04W 12/02, H04W 12/04, H04W 12/08, H04W 4/08, H04L 12/18, H04L 29/06

(54) **METHOD, DEVICE AND SYSTEM FOR SELECTING SECURITY ALGORITHM**
VERFAHREN, VORRICHTUNG UND SYSTEM ZUR AUSWAHL EINES SICHERHEITSALGORITHMUS
MÉTHODE, DISPOSITIF ET SYSTÈME DE SÉLECTION D'ALGORITHME DE SÉCURITÉ

(30) Priority: 31.07.2014 CN 201410375477
(43) Date of publication of application: 07.06.2017
(73) Proprietor: ZTE Corporation, Shenzhen, Guangdong 518057 (CN)
(72) Inventor: WEI, Zheng, Shenzhen Guangdong 518057 (CN); TONG, Zhixin, Shenzhen Guangdong 518057 (CN); HAN, Chengyan, Shenzhen Guangdong 518057 (CN)
(74) Representative: Novagraaf Technologies
(86) International application number: PCT/CN2014/093308
(87) International publication number: WO 2015/117489

(56) References cited:
- CN-A- 1 599 485
- CN-A- 101 001 252
- CN-A- 101 128 061
- CN-A- 101 883 346
- CN-A- 102 487 502
- US-A1- 2010 263 021
- US-A1- 2014 105 383

## Description

### Technical Field

The present disclosure relates to the field of communications, and in particular to a method, device and system for selecting a security algorithm.

### Background

In the LTE system, in order to ensure the security request of data service, a set of security encryption mechanism is defined in an agreement, which is performed like this: a terminal(UE) reports a security encryption algorithm supported by the terminal to a core network; the core network sends a security capability information of the UE and a calculated root key information to a base station; then the base station selects a set of security encryption algorithm for current terminal service according to capability of the UE and the base station support capability, and calculates a set of key according to root key sent by the core network, for the encryption of subsequent service data.

In broadband trunking system, in order to save air interface resource and radio resource control (RRC) connection data, a concept of sharing channel in the trunking service of group calling is introduced, which means, in one cell for a group call service, only one set of physical resource connection is allocated for the sharing of multiple users in a trunking group calling, that is, data of one service is received by multiple terminals. For the same data, there is only one set of corresponding security algorithm and key, the security capability of terminals in one group is different from each other, then it cannot be ensured that the security algorithm and key is supported by all the terminals in the group, further, it cannot be ensured that all the terminals in the group receive service data successfully.

As for the problem that not all the terminals in the group can receive service data successfully in the trunking service, no effective solutions are available currently.

US2014105383A1 provides method and device for negotiating machine type communication device group algorithm. US2010263021A1 provides a system and method for selection of security algorithms. However, the above mentioned problem still remains unsolved.

### Summary

The present disclosure provides a method, device and system for selecting a security algorithm, to at least solve the problem that not all the terminals in the group can receive service data successfully in the trunking service.

Based on an embodiment of the present disclosure, the present disclosure provides a method for selecting a security algorithm, including: receiving, by a core network, an attachment request initiated to a broadband trunking network by a first UE, wherein, the attachment request carries a first security capability information supported by the first UE; determining, by the core network, a group to which the first UE belongs, and obtaining security capability information of each second UE in the group; and selecting, by the core network, a security algorithm supported by both the security capability information of the first UE and the security capability information of each second UE; and sending the selected security algorithm to the first UE as a security algorithm of the group.

Preferably, the method further includes: determining, by the core network, the selected security algorithm is different from stored security algorithm of the group, updating the security algorithm of the group into the selected security algorithm, and sending the selected security algorithm to each second UE in the group as the security algorithm of the group.

Preferably, sending the selected security algorithm to each second UE in the group as the security algorithm of the group, including: sending, by the core network, a group information update message to each second UE, and the group information update message carries the selected security algorithm.

Preferably, after receiving, by the core network, the attachment request initiated to the broadband trunking network by the first UE, the method further includes: storing, by the core network, the security capability information of the first UE.

Preferably, selecting, by the core network, the security algorithm supported by both the security capability information of the first UE and the security capability information of each second UE, including: judging, by the core network, whether the security algorithm of the current group is supported by the first UE according to the security capability information of the first UE, if it is, selecting the security algorithm of the current group, otherwise, obtaining an intersection of the security capability information of the first UE and the security capability information of each second UE, and selecting a security algorithm supported by the intersection.

Preferably, the method further includes: when a group call service of the group is initiated, informing, by the core network, the selected security algorithm and corresponding key to the base station, and indicating the base station to encrypt a signaling and service data by using the security algorithm and key in the group call service transmission process.

Based on an embodiment of the present disclosure, a device for selecting a security algorithm is provided, which includes: a receiving module, which is configured to receive an attachment request initiated to a broadband trunking network by a first user equipment, UE, wherein, the attachment request carries a first security capability information supported by the first UE; an obtaining module, which is configured to determine a group to which the first UE belongs, and obtain security capability information of each second UE in the group; a selecting module, which is configured to select a security algorithm supported by both the security capability information of the first UE and the security capability information of each second UE; and a sending module, which is configured to send the selected security algorithm to the first UE as a security algorithm of the group.

Preferably, the device further includes: a judging module, which is configured to judge whether selected security algorithm is same to stored security algorithm of the group, if not, trigger an updating module; the updating module is set to update the security algorithm of the group into the selected security algorithm, and send the selected security algorithm to each second UE in the group.

Preferably, the device further includes: a storing module, which is configured to store the security capability information of the first UE.

Preferably, the selecting module includes a judging unit, which is configured to judge whether the security algorithm of the current group is supported by the first UE according to the security capability information of the first UE; a selecting unit, which is configured to select the security algorithm of the current group when the security algorithm of the current group is supported by the first UE, obtain the intersection of the security capability information of the first UE and the security capability information of each second UE when the security algorithm of the current group is not supported by the first UE, and select a security algorithm supported by the intersection.

Preferably, the device further includes: an informing module, which is configured to inform the selected security algorithm and corresponding key to the base station when group call service of the group is initiated, and indicate the base station to encrypt a signaling and service data by using the security algorithm and key in the group call service transmission process.

Based on an embodiment of the present disclosure, a system for selecting a security algorithm is provided, which includes: a core network and a base station, wherein the core network includes a device for selecting the security algorithm; and the base station, in the group call service transmission process, is set to encrypt a signaling and service data by using the security algorithm and key according to the security algorithm of group informed by the core network and corresponding key.

Based on the above embodiments of the present disclosure, when the attachment request to the broadband trunking network initiated by the UE is received, the process of selecting, by the core network, the security algorithm supported by all the UE in the group to which the UE belongs as the security algorithm of the group and sending to the UE, solves the problem that not all the terminals in the group can receive service data successfully in the trunking service, ensures that all the UE in the group receive service data successfully, and ensures the reliability of the trunking service.

### Brief Description of the Drawings

The drawings here are used for the further description of the present disclosure, being part of the present disclosure, the embodiment and description of the present disclosure is used for describing the present disclosure and not for limiting the scope of protection of the present disclosure. In drawings:
Fig. 1 shows a flowchart of a method for selecting a security algorithm according to an embodiment of the present disclosure;
Fig. 2 shows a structural diagram of a device for selecting a security algorithm according to an embodiment of the present disclosure;
Fig. 3 shows a structural diagram of a system for selecting a security algorithm according to an embodiment of the present disclosure;
Fig. 4 shows a flowchart of a signaling of an embodiment 1;
Fig. 5 shows a flowchart of a signaling of an embodiment 2.

### Detailed Description of the Embodiments

The present disclosure is described below with reference to the drawings and the embodiment, it is important to note that the embodiment and characteristics in the embodiment can be combined mutually in condition of no conflict.

In a cell, for one group call service, only one set of radio resource connection is built for the sharing of multiple terminal users, for the selection of encryption algorithm, the encryption algorithm is configured by the core network and then sent to the base station and terminal respectively, if the configured algorithm is not supported by the terminal, then service data in the group cannot be received by the terminal. Aiming at the problem in related art, the present disclosure provides a solution, in the embodiment of the present disclosure, a security encryption algorithm supported by all the terminals is selected, by the core network, according to the security capability of each terminal in the group.

Based on an embodiment of the present disclosure, a method for selecting a security algorithm is provided.

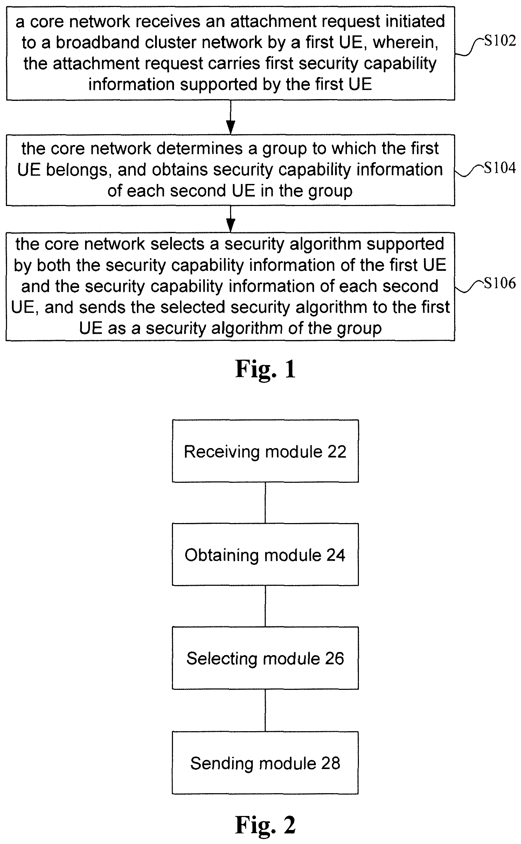

Fig. 1 shows a flowchart of a method for selecting a security algorithm according to an embodiment of the present disclosure, as shown in Fig. 1, the method includes the following steps S102-S106.

S102, a core network receives an attachment request initiated to a broadband trunking network by a first UE, wherein, the attachment request carries first security capability information supported by the first UE.

S104, the core network determines the group to which the first UE belongs, and obtains the security capability information of each second UE in the group.

In another embodiment of the present disclosure, an identifier information and a security capability information of terminal in each service group is stored by the core network, such as IMSI etc., then, preferably, after the attachment request is received by the core network, the identifier information and the security capability information of the UE is stored in the group to which the UE belongs.

In another embodiment of the present disclosure, capability information is carried by the terminal in attachment process, which includes the security capability information of the terminal, such as security encryption algorithm etc. supported by the terminal, and security capability information supported by each terminal is supported by the core network.

S106, selecting, by the core network, a security algorithm supported by both the security capability information of the first UE and the security capability information of each second UE, and sending the selected security algorithm to the first UE as a security algorithm of the group.

After the successful attachment of the terminal, taking, by the core network, the selected security algorithm as the security algorithm of corresponding group, initiating the information update process of the group to which the terminal belongs, sending the information and related configuration information of the group to which the terminal belongs to the terminal, the information includes the security algorithm corresponding to the group. When generating the security algorithm information corresponding to the group in a group update message, traversing, by the core network, security capability supported by all attached terminal in the group, obtaining an intersection supported by all the terminals, selecting a security algorithm supported by all terminals and sending to the terminal.

In another embodiment of the present disclosure, after the step S106, the method further includes: determining, by the core network, the selected security algorithm is different from stored security algorithm of the group, updating the security algorithm of the group into the selected security algorithm, and sending the selected security algorithm to each second UE in the group as the security algorithm of the group. For example, sending, by the core network, a group information update message to each second UE, and the group information update message carries the selected security algorithm.

In another embodiment of the present disclosure, in the step S106, when selecting, by the core network, the security algorithm supported by both the security capability information of the first UE and the security capability information of each second UE, judging whether the security algorithm of the current group is supported by the first UE according to the security capability information of the first UE, if it is, selecting the security algorithm of the current group, otherwise, obtaining an intersection of the security capability information of the first UE and the security capability information of each second UE, and selecting the security algorithm supported by the intersection.

In an embodiment of the present disclosure, when new terminal attaches, if the security algorithm, calculated by the group to which the group belongs, changes, re-sending the group information update message to other attached terminals in the group, to update the security algorithm stored in the terminal and corresponding to the group.

In another embodiment of the present disclosure, when a group call service is initiated, informing, by the core network, the security algorithm and key corresponding to the group to the base station according to the group information update message, and indicating the base station to encrypt a signaling and service data by using the security algorithm and key in the group call service transmission process.

In the embodiment of the present disclosure, the first UE may belong to multiple groups, then, for each group, executing the steps S104 and S106 respectively.

Through the method disclosed in the embodiment of the present disclosure, the security algorithm selected for the service group is a security algorithm supported by all the terminals in the group, and then all the terminals in the group can receive the service data successfully.

The embodiment of the present disclosure further provides a device for selecting a security algorithm, which can be set to realize the above method.

Fig. 2 shows a structural diagram of a device for selecting a security algorithm according to an embodiment of the present disclosure, as shown in the Fig. 2, the device mainly includes: a receiving module 22, which is configured to receive an attachment request initiated to a broadband trunking network by a first user equipment, UE, wherein, the attachment request carries a first security capability information supported by the first UE; an obtaining module 24, which is configured to determine a group to which the first UE belongs, and obtain security capability information of each second UE in the group; a selecting module 26, which is configured to select a security algorithm supported by both the security capability information of the first UE and the security capability information of each second UE; and a sending module 28, which is configured to send the selected security algorithm to the first UE as a security algorithm of the group.

Preferably, the device further includes: a judging module, which is configured to judge whether selected security algorithm is same to stored security algorithm of the group, if not, trigger an updating module; the updating module is set to update the security algorithm of the group into the selected security algorithm, and send the selected security algorithm to each second UE in the group as the security algorithm of the group.

Preferably, the device further includes: a storing module, which is configured to store the security capability information of the first UE.

Preferably, the selecting module includes a judging unit, which is configured to judge whether the security algorithm of the current group is supported by the first UE according to the security capability information of the first UE; a selecting unit, which is configured to select the security algorithm of the current group when the security algorithm of the current group is supported by the first UE, obtain the intersection of the security capability information of the first UE and the security capability information of each second UE when the security algorithm of the current group is not supported by the first UE, and select a security algorithm supported by the intersection.

Preferably, the device further includes: an informing module, which is configured to inform the selected security algorithm and corresponding key to the base station when group call service of the group is initiated, and indicate the base station to encrypt a signaling and service data by using the security algorithm and key in the group call service transmission process.

The embodiment of the present disclosure further provides a system for selecting a security algorithm.

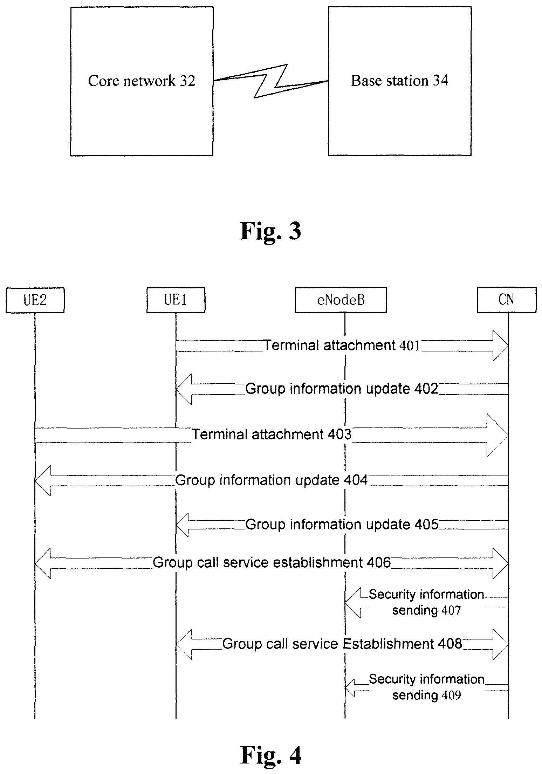

Fig. 3 shows a structural diagram of a system for selecting a security algorithm of the present disclosure, as shown in Fig. 3, the system includes: a core network 32 and a base station 34, wherein the core network 32 may include a device for selecting the security algorithm in each embodiment; and the base station 34, in the group call service transmission process, is set to encrypt a signaling and service data by using the security algorithm and key according to the security algorithm of group informed by the core network and corresponding key.

The technical solution disclosed in the embodiment of the present disclosure is described below with reference to detailed embodiment.

### Embodiment 1

The service group to which the UE belongs is used for the description of the embodiment.

Fig. 4 shows a flowchart of a signaling selected by a security algorithm corresponding to a group in the embodiment, as shown in Fig. 4, mainly including the following steps:
S401, UE1 initiates an attachment process to a bandwidth trunking network when the bandwidth trunking service is needed, establishes a RRC connection with an eNode B, a capability information supported by the UE1 is carried in the attachment message to the core network, the information includes a supported security algorithm etc., the core network stores the capability information of the UE1.
S402, the core network searches a configuration information, determines the group to which the UE1 belongs, and obtains each user registered in the group circularly, in present embodiment, the UE1 is supposed to be the first user registered in the group, the core network selects an algorithm in the security algorithm reported by the UE1 as the security algorithm used by user in the group, initiates a group information update process, sends a content related to the group and the security algorithm corresponding to the group to the UE1, and stores the new security algorithm corresponding to the group.
S403, the UE2 initiates the attachment process to the bandwidth trunking network when the bandwidth trunking service is needed, and establishes the RRC connection with the eNode B, the capability information supported by the UE2 is carried in the attachment message to the core network, the information includes the supported security algorithm etc., and the core network stores the capability information of the UE2.
S404, the core network searches the configuration information, determines the group to which the UE2 belongs, obtains each user registered in the group circularly. Suppose that other users are also registered in the group to which the UE2 belongs, such as the UE1, then, according to the user registered in the group and the intersection of the security capability supported by the UE1 and the UE2, the core network selects a security algorithm as the security algorithm used by user in the group, initiates the group information update process, sends the content related to the group and the security algorithm corresponding to the group to the UE2, and stores the new security algorithm corresponding to the group.
S405, the core network judges that the new security algorithm of the group is different from the security algorithm stored in the group, initiates the group update process, and informs the new security algorithm to other user in the group, such as UE1.
S406, the UE2 initiates the establishment of a trunking group call service, and establishes a RRC connection and a shared bearer of the trunking.
S407, the core network informs the eNode B of the group security algorithm of current service, in the group call service transmission process, the eNode B protects the signaling by using the security algorithm, and encrypting the signaling and service data.
S408, if the UE1 is not in the cell of the UE2, after receiving a paging of the group service initiated by the UE1, the UE1 replies a paging response, and the eNode B and the UE1 start to establish a service bearer of the trunking shared channel.
S409, the core network informs the eNode B of the group security algorithm of current service, in the group call service transmission process, the eNode B protects the signaling by using the security algorithm, and encrypts the signaling and service data.

### Embodiment 2

The multiple groups to which the UE belongs are used for the description of process logic, in security algorithm selection, by the core network in the embodiment.

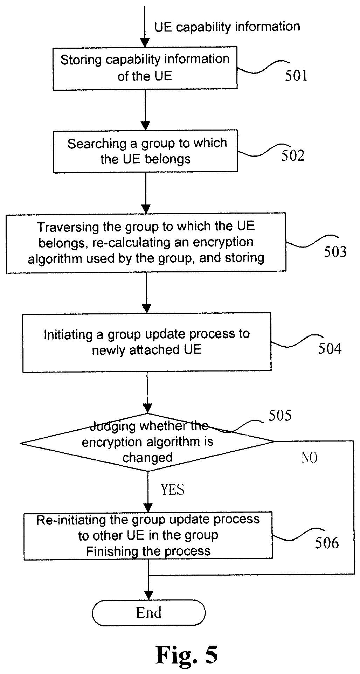

Fig. 5 shows a flowchart of security algorithm selection by the core network, as shown in Fig. 5, mainly including the following steps:
S501, after receiving a new attachment message of the UE, the core network stores the capability information of the UE, and the information includes the security capability information.
S502, the core network searches all group information to which the UE belongs and the security algorithm used by the group currently.
S503, each group to which the UE belongs is traversed, for each group, it is judged whether currently used security algorithm is in a security capability intersection supported by the UE, if it is, the original security algorithm is kept, if not, otherwise, all capability information of all UE in the group is obtained, including newly added UE, the intersection is obtained so as to determine the security algorithm corresponding to the current group, and stores it.
S504, the core network initiates a group update process to newly attached UE, and sends the UE parameters such as security algorithm of all groups to which the UE belongs to.
S505, it is judged whether the security encryption algorithm corresponding to the group is changed, if it is, the S506 executed, otherwise, the security encryption algorithm selection process is ceased.
S506, a group update process is re-initiated to other UE in the group, and the new security algorithm is informed to other UE in the group.

d on above description, in the embodiment, when the attachment request to the broadband trunking network initiated by the UE is received, the process of sending, by the core network, the security algorithm supported by all the UE in the group to which the UE belongs to the UE, solves the problem that not all the terminals in the group can receive service data successfully in the trunking service, ensures that all the UE in the group receive service data successfully, and ensures the reliability of the trunking service.

Certainly, technician of the field should understand that each module or step of the present disclosure can be realized through a common calculation device, the modules may in a single calculation device, or distributed in a network composed of multiple calculation devices, preferably, the modules or steps are realized through a procedure code executable by the calculation device, then stored in a storing device, in a certain condition, to execute shown or described steps in a different order, or modules are prepared into each integrated circuit module, or multiple modules or steps are prepared into a single integrated circuit module. Thus, the present disclosure is not limit to a specific hardware and software combination.

### Industrial Applicability

The above embodiment of the present disclosure provides a method, device and system for selecting a security algorithm, the advantages are as the follows: solving the problem that not all the terminals in the group can receive service data successfully in the trunking service, ensuring that all the UE in the group receive service data successfully, and ensuring the reliability of the trunking service.

## Claims

1. A method for selecting a security algorithm, comprising:
receiving, by a core network (32), an attachment request initiated to a broadband trunking network by a first user equipment, UE, wherein, the attachment request carries first security capability information supported by the first UE (S102);
determining, by the core network (32), a group to which the first UE belongs, and obtaining security capability information of each second UE in the group (S104); and
selecting, by the core network (32), a security algorithm supported by both the security capability information of the first UE and the security capability information of each second UE; and sending the selected security algorithm to the first UE as a security algorithm of the group (S106).

2. The method according to claim 1, wherein, the method further comprises:
determining, by the core network (32), the selected security algorithm is different from stored security algorithm of the group, updating the security algorithm of the group into the selected security algorithm, and sending the selected security algorithm to each second UE in the group as the security algorithm of the group.

3. The method according to claim 2, wherein, sending the selected security algorithm to each second UE in the group as the security algorithm of the group, comprising:
sending, by the core network (32), a group information update message to each second UE, and the group information update message carries the selected security algorithm.

4. The method according to claim 1, wherein, after receiving, by the core network (32), the attachment request initiated to the broadband trunking network by the first UE (S102), the method further comprises:
storing, by the core network (32), the security capability information of the first UE.

5. The method according to claim 1, wherein, selecting, by the core network (32), the security algorithm supported by both the security capability information of the first UE and the security capability information of each second UE (S106), comprising:
judging, by the core network (32), whether the security algorithm of the current group is supported by the first UE according to the security capability information of the first UE, if it is, selecting the security algorithm of the current group, otherwise, obtaining an intersection of the security capability information of the first UE and the security capability information of each second UE, and selecting a security algorithm supported by the intersection.

6. The method according to any one of claims 1-5, wherein, the method further comprises:
when group call service of the group is initiated, informing, by the core network (32), the selected security algorithm and corresponding key to a base station (34), and indicating the base station (34) to encrypt signaling and service data by using the security algorithm and key in the group call service transmission process.

7. A device for selecting a security algorithm, comprising:
a receiving module (22), configured to receive an attachment request initiated to a broadband trunking network by a first user equipment, UE, wherein, the attachment request carries first security capability information supported by the first UE;
an obtaining module (24), configured to determine a group to which the first UE belongs, and obtain security capability information of each second UE in the group;
a selecting module (26), configured to select a security algorithm supported by both the security capability information of the first UE and the security capability information of each second UE;
and a sending module (28), configured to send the selected security algorithm to the first UE as a security algorithm of the group.

8. The device according to claim 7, wherein, the device further comprises:
a judging module, configured to judge whether selected security algorithm is same to stored security algorithm of the group, if not, trigger an updating module;
the updating module is set to update the security algorithm of the group into the selected security algorithm, and send the selected security algorithm to each second UE in the group.

9. The device according to claim 7, wherein, the device further comprises: a storing module, configured to store the security capability information of the first UE.

10. The device according to claim 7, wherein, the selecting module (26) comprises:
a judging unit, configured to judge whether the security algorithm of the current group is supported by the first UE according to the security capability information of the first UE;
a selecting unit, configured to select the security algorithm of the current group when the security algorithm of the current group is supported by the first UE, obtain the intersection of the security capability information of the first UE and the security capability information of each second UE when the security algorithm of the current group is not supported by the first UE, and select a security algorithm supported by the intersection.

11. The device according to any one of claims 7-10, wherein, the device further comprises:
an informing module, configured to inform the selected security algorithm and corresponding key to a base station (34) when group call service of the group is initiated, and indicate the base station (34) to encrypt a signaling and service data by using the security algorithm and key in the group call service transmission process.

12. A system for selecting a security algorithm, comprising: a core network (32) and a base station (34), wherein,
the core network comprises the device according to any one of claims 7-11; and the base station (34), in the group call service transmission process of a group, is configured to encrypt signaling and service data by using a security algorithm and key according to the security algorithm of the group, of which it is informed by the core network (32), which selected said security algorithm of the group, and corresponding key.

## Patentansprüche

1. Verfahren zum Auswählen eines Sicherheitsalgorithmus, umfassend:
Empfangen, durch ein Kernnetz (32), einer Anschlussanfrage, die von einem ersten Anwenderendgerät, UE, an ein Breitband-Trunking-Netz initiiert wird, wobei die Anschlussanfrage erste Sicherheitsfähigkeitsinformationen übermittelt, die vom ersten UE unterstützt werden (S102);
Bestimmen, durch das Kernnetz (32), einer Gruppe, zu der das erste UE gehört, und Beziehen von Sicherheitsfähigkeitsinformationen jedes zweiten UE in der Gruppe (S104); und
Auswählen, durch das Kernnetz (32), eines Sicherheitsalgorithmus, der von sowohl den Sicherheitsfähigkeitsinformationen des ersten UE als auch den Sicherheitsfähigkeitsinformationen jedes zweiten UE unterstützt wird; und Senden des ausgewählten Sicherheitsalgorithmus an das erste UE als einen Sicherheitsalgorithmus der Gruppe (S106).

2. Verfahren nach Anspruch 1, wobei das Verfahren weiter umfasst:
Bestimmen, durch das Kernnetz (32), dass sich der ausgewählte Sicherheitsalgorithmus vom gespeicherten Sicherheitsalgorithmus der Gruppe unterscheidet, Aktualisieren des Sicherheitsalgorithmus der Gruppe auf den ausgewählten Sicherheitsalgorithmus, und Senden des ausgewählten Sicherheitsalgorithmus an jedes zweite UE in der Gruppe als den Sicherheitsalgorithmus der Gruppe.

3. Verfahren nach Anspruch 2, wobei das Senden des ausgewählten Sicherheitsalgorithmus an jedes zweite UE in der Gruppe als den Sicherheitsalgorithmus der Gruppe umfassend:
Senden, durch das Kernnetz (32), einer Gruppeninformationen-Aktualisierungsnachricht an jedes zweite UE, und die Gruppeninformationen-Aktualisierungsnachricht den ausgewählten Sicherheitsalgorithmus übermittelt.

4. Verfahren nach Anspruch 1, wobei nach dem Empfangen, durch das Kernnetz (32), der vom ersten UE an das Breitband-Trunking-Netz initiierten Anschlussanfrage (S102) das Verfahren weiter umfasst:
Speichern, durch das Kernnetz (32), der Sicherheitsfähigkeitsinformationen des ersten UE.

5. Verfahren nach Anspruch 1, wobei das Auswählen, durch das Kernnetz (32), des Sicherheitsalgorithmus, der von sowohl den Sicherheitsfähigkeitsinformationen des ersten UE als auch den Sicherheitsfähigkeitsinformationen jedes zweiten UE unterstützt wird (S106) umfassend:
Beurteilen, durch das Kernnetz (32), ob der Sicherheitsalgorithmus der aktuellen Gruppe gemäß den Sicherheitsfähigkeitsinformationen des ersten UE vom ersten UE unterstützt wird, wenn dem so ist, Auswählen des Sicherheitsalgorithmus der aktuellen Gruppe, andernfalls Beziehen einer Schnittmenge der Sicherheitsfähigkeitsinformationen des ersten UE und der Sicherheitsfähigkeitsinformationen jedes zweiten UE, und Auswählen eines Sicherheitsalgorithmus, der von der Schnittmenge unterstützt wird.

6. Verfahren nach einem der Ansprüche 1-5, wobei das Verfahren weiter umfasst:
wenn Gruppenrufdienst der Gruppe initiiert wird, Melden, durch das Kernnetz (32), des ausgewählten Sicherheitsalgorithmus und entsprechenden Schlüssels an eine Basisstation (34), und Hinweisen der Basisstation (34) darauf, Signalisierungs- und Dienstdaten durch Verwenden des Sicherheitsalgorithmus und Schlüssels im Gruppenrufdienst-Übertragungsprozess zu verschlüsseln.

7. Vorrichtung zum Auswählen eines Sicherheitsalgorithmus, umfassend:
ein Empfangsmodul (22), das dazu konfiguriert ist, eine von einem ersten Anwenderendgerät, UE, an ein Breitband-Trunking-Netz initiierte Anschlussanfrage zu empfangen, wobei die Anschlussanfrage erste Sicherheitsfähigkeitsinformationen übermittelt, die vom ersten UE unterstützt werden;
ein Bezugsmodul (24), das dazu konfiguriert ist, eine Gruppe zu bestimmen, zu der das erste UE gehört, und Sicherheitsfähigkeitsinformationen jedes zweiten UE in der Gruppe zu beziehen;
ein Auswahlmodul (26), das dazu konfiguriert ist, einen Sicherheitsalgorithmus auszuwählen, der von sowohl den Sicherheitsfähigkeitsinformationen des ersten UE als auch den Sicherheitsfähigkeitsinformationen jedes zweiten UE unterstützt wird;
und ein Sendemodul (28), das dazu konfiguriert ist, den ausgewählten Sicherheitsalgorithmus als einen Sicherheitsalgorithmus der Gruppe an das erste UE zu senden.

8. Vorrichtung nach Anspruch 7, wobei die Vorrichtung weiter umfasst:
ein Beurteilungsmodul, das dazu konfiguriert ist, zu beurteilen, ob ausgewählter Sicherheitsalgorithmus mit gespeichertem Sicherheitsalgorithmus der Gruppe gleich ist, wenn nicht, ein Aktualisierungsmodul zu triggern;
das Aktualisierungsmodul, das dazu eingerichtet ist, den Sicherheitsalgorithmus der Gruppe auf den ausgewählten Sicherheitsalgorithmus zu aktualisieren, und den ausgewählten Sicherheitsalgorithmus an jedes zweite UE in der Gruppe zu senden.

9. Vorrichtung nach Anspruch 7, wobei die Vorrichtung weiter umfasst: ein Speichermodul, das dazu konfiguriert ist, die Sicherheitsfähigkeitsinformationen des ersten UE zu speichern.

10. Vorrichtung nach Anspruch 7, wobei das Auswahlmodul (26) umfasst:
eine Beurteilungseinheit, die dazu konfiguriert ist, zu beurteilen, ob der Sicherheitsalgorithmus der aktuellen Gruppe gemäß den Sicherheitsfähigkeitsinformationen des ersten UE vom ersten UE unterstützt wird;
eine Auswahleinheit, die dazu konfiguriert ist, den Sicherheitsalgorithmus der aktuellen Gruppe auszuwählen, wenn der Sicherheitsalgorithmus der aktuellen Gruppe vom ersten UE unterstützt wird, die Schnittmenge der Sicherheitsfähigkeitsinformationen des ersten UE und der Sicherheitsfähigkeitsinformationen jedes zweiten UE zu beziehen, wenn der Sicherheitsalgorithmus der aktuellen Gruppe nicht vom ersten UE unterstützt wird, und einen Sicherheitsalgorithmus auszuwählen, der von der Schnittmenge unterstützt wird.

11. Vorrichtung nach einem der Ansprüche 7-10, wobei die Vorrichtung weiter umfasst:
ein Meldemodul, das dazu konfiguriert ist, den ausgewählten Sicherheitsalgorithmus und entsprechenden Schlüssel an eine Basisstation (34) zu melden, wenn Gruppenrufdienst der Gruppe initiiert wird, und die Basisstation (34) darauf hinzuweisen, Signalisierungs- und Dienstdaten durch Verwenden des Sicherheitsalgorithmus und Schlüssels im Gruppenrufdienst-Übertragungsprozess zu verschlüsseln.

12. System zum Auswählen eines Sicherheitsalgorithmus, umfassend: ein Kernnetz (32) und eine Basisstation (34), wobei
das Kernnetz die Vorrichtung nach einem der Ansprüche 7-11 umfasst; und
die Basisstation (34) dazu konfiguriert ist, im Gruppenrufdienst-Übertragungsprozess einer Gruppe Signalisierungs- und Dienstdaten durch Verwenden eines Sicherheitsalgorithmus und Schlüssels gemäß dem Sicherheitsalgorithmus der Gruppe, über den es von dem Kernnetz (32) informiert wird, welches den Sicherheitsalgorithmus der Gruppe auswählte, und entsprechenden Schlüssel zu verschlüsseln.

## Revendications

1. Procédé de sélection d'un algorithme de sécurité, comprenant :
la réception, par un réseau central (32), d'une demande de rattachement lancée à un réseau de partage de ressources à large bande par un premier équipement utilisateur, UE, dans lequel, la demande de rattachement achemine des premières informations de capacité de sécurité prises en charge par le premier UE (S102) ;
la détermination, par le réseau central (32), d'un groupe auquel appartient le premier UE, et l'obtention d'informations de capacité de sécurité de chaque second UE dans le groupe (S104) ; et
la sélection, par le réseau central (32), d'un algorithme de sécurité pris en charge à la fois par les informations de capacité de sécurité du premier UE et les informations de capacité de sécurité de chaque second UE ; et l'envoi de l'algorithme de sécurité sélectionné au premier UE en tant qu'algorithme de sécurité du groupe (S106).

2. Procédé selon la revendication 1, dans lequel, le procédé comprend en outre :
la détermination, par le réseau central (32), que l'algorithme de sécurité sélectionné est différent d'un algorithme de sécurité stocké du groupe, la mise à jour de l'algorithme de sécurité du groupe en l'algorithme de sécurité sélectionné, et l'envoi de l'algorithme de sécurité sélectionné à chaque second UE dans le groupe en tant qu'algorithme de sécurité du groupe.

3. Procédé selon la revendication 2, dans lequel, l'envoi de l'algorithme de sécurité sélectionné à chaque second UE dans le groupe en tant qu'algorithme de sécurité du groupe comprenant :
l'envoi, par le réseau central (32), d'un message de mise à jour d'informations de groupe à chaque second UE, et le message de mise à jour d'informations de groupe achemine l'algorithme de sécurité sélectionné.

4. Procédé selon la revendication 1, dans lequel, après réception, par le réseau central (32), de la demande de rattachement lancée au réseau de partage de ressources à large bande par le premier UE (S102), le procédé comprend en outre :
le stockage, par le réseau central (32), des informations de capacité de sécurité du premier UE.

5. Procédé selon la revendication 1, dans lequel, la sélection, par le réseau central (32), de l'algorithme de sécurité pris en charge à la fois par les informations de capacité de sécurité du premier UE et les informations de capacité de sécurité de chaque second UE (S106), comprenant :
le fait d'estimer, par le réseau central (32), si l'algorithme de sécurité du groupe actuel est pris en charge par le premier UE selon les informations de capacité de sécurité du premier UE, s'il est, la sélection de l'algorithme de sécurité du groupe actuel, sinon, l'obtention d'une intersection des informations de capacité de sécurité du premier UE et des informations de capacité de sécurité de chaque second UE, et la sélection d'un algorithme de sécurité pris en charge par l'intersection.

6. Procédé selon l'une quelconque des revendications 1 à 5, dans lequel, le procédé comprend en outre :
lorsqu'un service d'appel de groupe du groupe est lancé, l'information d'une station de base (34), par le réseau central (32), concernant l'algorithme de sécurité sélectionné et une clé correspondante, et l'indication à la station de base (34) qu'il faut chiffrer des données de signalisation et de service en utilisant l'algorithme de sécurité et la clé dans le processus de transmission de service d'appel de groupe.

7. Dispositif de sélection d'un algorithme de sécurité, comprenant :
un module de réception (22), configuré pour recevoir une demande de rattachement lancée à un réseau de partage de ressources à large bande par un premier équipement utilisateur, UE, dans lequel, la demande de rattachement achemine des premières informations de capacité de sécurité prises en charge par le premier UE ;
un module d'obtention (24), configuré pour déterminer un groupe auquel appartient le premier UE, et obtenir des informations de capacité de sécurité de chaque second UE dans le groupe ;
un module de sélection (26), configuré pour sélectionner un algorithme de sécurité pris en charge à la fois par les informations de capacité de sécurité du premier UE et les informations de capacité de sécurité de chaque second UE ;
et un module d'envoi (28), configuré pour envoyer l'algorithme de sécurité sélectionné au premier UE en tant qu'algorithme de sécurité du groupe.

8. Dispositif selon la revendication 7, dans lequel, le dispositif comprend en outre :
un module d'estimation, configuré pour estimer si l'algorithme de sécurité sélectionné est identique à l'algorithme de sécurité stocké du groupe, si ce n'est pas le cas, pour déclencher un module de mise à jour ;
le module de mise à jour est réglé pour mettre à jour l'algorithme de sécurité du groupe en l'algorithme de sécurité sélectionné, et envoyer l'algorithme de sécurité sélectionné à chaque second UE dans le groupe.

9. Dispositif selon la revendication 7, dans lequel, le dispositif comprend en outre : un module de stockage, configuré pour stocker les informations de capacité de sécurité du premier UE.

10. Dispositif selon la revendication 7, dans lequel, le module de sélection (26) comprend :
une unité d'estimation, configurée pour estimer si l'algorithme de sécurité du groupe actuel est pris en charge par le premier UE selon les informations de capacité de sécurité du premier UE ;
une unité de sélection, configurée pour sélectionner l'algorithme de sécurité du groupe actuel lorsque l'algorithme de sécurité du groupe actuel est pris en charge par le premier UE, obtenir l'intersection des informations de capacité de sécurité du premier UE et des informations de capacité de sécurité de chaque second UE lorsque l'algorithme de sécurité du groupe actuel n'est pas pris en charge par le premier UE, et sélectionner un algorithme de sécurité pris en charge par l'intersection.

11. Dispositif selon l'une quelconque des revendications 7 à 10, dans lequel, le dispositif comprend en outre :
un module d'information, configuré pour informer une station de base (34) concernant l'algorithme de sécurité sélectionné et une clé correspondante lorsqu'un service d'appel de groupe du groupe est lancé, et indiquer à la station de base (34) qu'il faut chiffrer des données de signalisation et de service en utilisant l'algorithme de sécurité et la clé dans le processus de transmission de service d'appel de groupe.

12. Système de sélection d'un algorithme de sécurité, comprenant : un réseau central (32) et une station de base (34), dans lequel,
le réseau central comprend le dispositif selon l'une quelconque des revendications 7 à 11 ; et
la station de base (34), dans le processus de transmission de service d'appel de groupe d'un groupe, est configurée pour chiffrer des données de signalisation et de service en utilisant un algorithme de sécurité et une clé selon l'algorithme de sécurité du groupe, dont elle est informée par le réseau central (32), qui a sélectionné ledit algorithme de sécurité du groupe, et la clé correspondante.
